# FASCICULE DE BREVET EUROPEEN

(11) **EP 0 684 172 B1**
(45) Date de publication et mention de la délivrance du brevet: **24.11.1999**
(21) Numéro de dépôt: 95401201.9
(22) Date de dépôt: 23.05.1995
(51) Int. Cl.: B61D 27/00

(54) **Dispositif d'obturation d'une gaine de distribution et installation comportant un tel dispositif**
Absperrvorrichtung für einen Verteilungskanal, and Anlage mit einer solchen Vorrichtung
Shut-off device for a distributing duct, and installation comprising such a device

(30) Priorité: 26.05.1994 FR 9406383
(43) Date de publication de la demande: 29.11.1995
(73) Titulaire: GEC ALSTHOM TRANSPORT SA, 75016 Paris (FR)
(72) Inventeur: Dion, Jean-Pierre, F-17450 Fouras (FR)
(74) Mandataire: Gosse, Michel

(56) Documents cités:
- EP-A- 0 234 297
- DE-A- 2 601 310
- FR-A- 1 222 483
- GB-A- 2 123 947
- GB-A- 2 156 067
- US-A- 2 874 925
- US-A- 2 984 448

## Description

La présente invention concerne les installations de climatisation ou de ventilation pour véhicule, notamment ferroviaire ou routier, selon le préambule de la revendication 1.

En d'autres termes, la présente invention porte sur un dispositif d'obturation d'un soufflage au plancher d'air conditionné.

Il est connu, des documents de l'état de la technique, des installations de ventilation ou de climatisation pour véhicule, notamment ferroviaire ou routier, comportant des dispositifs d'obturation de gaine de climatisation.

Le document **FR 2 461 606 (1979)**, de AIR INDUSTRIE et de la SOCIETE NATIONALE DES CHEMINS DE FER FRANCAIS, décrit une installation de climatisation pour véhicule de transport en commun comprenant des moyens de climatisation alimentant une gaine de distribution sous pression, des premiers dispositifs de répartition localisés reliés chacun de façon permanente par ladite gaine de distribution et des deuxièmes dispositifs de répartition localisés alimentés chacun de façon intermittente également à partir de la susdite gaine de distribution.

Ce document enseigne l'utilisation d'un organe obturateur commandé par des moyens de commande permettant d'obturer les dispositifs de répartition localisés.

L'organe obturateur est constitué par un clapet, formé d'un disque métallique et d'un disque en matériau mou assurant l'étanchéité de l'obturation.

Une telle installation de climatisation a pour inconvénients que les moyens flexibles mis en oeuvre sont encombrants, bruyants et sont susceptibles de s'user.

De tels organes obturateurs ont également pour inconvénients d'être coûteux, fragiles et de ne pas permettre un nettoyage aisé et rapide de la gaine de distribution dans lesquelles ils sont installés.

Un autre inconvénient de ces organes obturateurs de l'art antérieur est qu'ils sont difficilement remplaçables.

Un autre inconvénient de ces organes obturateurs de l'art antérieur est qu'ils réalisent une distribution discontinue de l'air alors que le dispositif objet de l'invention de la demanderesse s'applique à une distribution continue qui améliore le confort.

Un autre inconvénient de ces organes obturateurs de l'art antérieur est qu'ils nécessite d'amener une alimentation électrique ou pneumatique à chaque organe obturateur.

Le document **EP 0 315 108 (1987)**, de HITACHI, décrit une installation de ventilation pour matériel roulant comprenant des moyens d'alimentation en air pour aspirer de l'air à partir de l'extérieur d'un véhicule et l'introduire à l'intérieur de ce dernier, et des moyens d'évacuation pour évacuer de l'air de l'intérieur du véhicule à l'extérieur de ce dernier.

Ce document enseigne l'utilisation de moyens flexibles en formes de plaques pour respectivement rétrécir les passages de circulation d'air en fonction de modifications de la pression d'air extérieur.

Une telle installation de ventilation et de tels moyens obturateurs possèdent les inconvénients cités précédemment.

Le document **FR 2 693 698 (1992)**, de la demanderesse, concerne un dispositif de climatisation permettant la suppression des variations brutales de pression dans les véhicules.

Le dispositif de climatisation décrit comprend, entre autres, des moyens d'obturation des conduits d'aspiration d'air extérieur et de rejet de l'air intérieur.

Ces moyens d'obturation sont constitués de volets adaptés aux dimensions des conduits. Ils sont disposés au voisinage de l'entrée et de la sortie du dispositif de climatisation. Ils sont mobiles en rotation, autour de bras solidaires de l'un de leurs côtés, au moyen de systèmes à charnière associés aux parois des conduits. Les bras sont commandés en rotation respectivement par des actionneurs fixés sur la structure résistante du véhicule.

Un tel dispositif de climatisation et de tels moyens d'obturation ne permettent cependant pas de remédier aux inconvénients cités précédemment.

Il est également connu, des documents de l'état de la technique, des dispositifs d'obturation trouvant une application dans les installations de ventilation ou de climatisation pour véhicule, notamment ferroviaire ou routier.

Les documents **EP 0 523 752 (1987)** et **EP 0 315 108 (1987)**, tous deux de HITACHI, décrivent un dispositif régulateur de l'écoulement d'air placé dans le circuit de ventilation d'un véhicule ferroviaire en déplacement, le véhicule comprenant au moins un conduit mettant en communication l'air contenu à l'intérieur du véhicule à l'air extérieur au véhicule, le dispositif comprenant des moyens de suppression ou de limitation de l'écoulement d'air dans le conduit en cas de variation rapide entre la pression externe et la pression interne au véhicule.

Comme indiqué précédemment, une telle installation de ventilation et de tels moyens obturateurs possèdent les inconvénients définis plus haut.

Enfin, il est également connu, des documents de l'état de la technique, des dispositifs d'obturation susceptibles de trouver une application dans les installations de ventilation ou de climatisation pour véhicule, notamment ferroviaire ou routier.

Le document **DE 371 783 (1923)**, de SILLER & BODENKIRCHEN, décrit des moyens d'obturation comprenant deux éléments d'obturation formés chacun d'une pièce s'ajustant dans un conduit, percée d'une lumière pour le passage de l'écoulement d'air, la lumière débouchant dans ladite face de réception, les faces de réception des deux éléments étant en vis-à-vis, la cloison étant une lame fixée par l'un de ses côtés et susceptible, en cas de variation rapide entre les pressions interne et externe au véhicule, d'être plaquée contre la face de réception de l'un des éléments d'obturation pour obstruer totalement sa lumière en cas de variation de pression dans un sens donné et d'être plaquée contre la face de réception de l'autre élément d'obturation pour obstruer sa lumière.

Le document **US 3 260 274 (1966)**, de J.P. MORGAN, décrit une valve comprenant:
- au moins un élément d'obturation A, B disposé dans un conduit laissant un passage permettant un écoulement, cet élément d'obturation possédant une face dite face de réception et
- au moins une cloison disposée transversalement par rapport à l'écoulement et située à proximité de la face de réception 15, 16 de l'élément d'obturation A, B, cette cloison étant déformable sous la pression.

En cas d'équilibre entre les pressions interne et externe, la cloison laisse un passage à l'écoulement et en cas de variation rapide entre les pressions interne et externe, la cloison est plaquée contre ladite face de réception pour obstruer le passage permettant l'écoulement.

Toujours selon le document **US 3 260 274**, de J.P. MORGAN, la valve comprend deux éléments d'obturation A, B formés chacun d'une pièce s'ajustant dans un conduit, percée d'une lumière pour le passage d'un écoulement et dont la face de réception, dans laquelle débouche la lumière, est une face incurvée concave, les faces de réception des deux éléments d'obturation étant en vis-à-vis, la cloison étant une lame articulée par deux de ses côtés opposés et située entre les deux faces de réception, la lame ayant une position de repos entre les deux faces de réception en cas d'équilibre entre les pressions interne et externe au véhicule et étant plaquée sur l'une ou l'autre des faces de réception en cas de variation rapide entre les pressions interne et externe au véhicule.

Le document **CH 492 910 (1968),** de BATELLE MEMORIAL INSTITUTE, décrit un élément d'obturation pouvant être une pièce s'ajustant dans un conduit, percée d'une lumière pour le passage de l'écoulement d'air et dont la face de réception, dans laquelle débouche la lumière, est une face incurvée concave, la cloison étant une lame articulée par deux de ses côtés opposés.

Les dispositifs d'obturation décrits dans ces derniers documents ont pour inconvénients d'être complexes et fragiles.

De plus, les dispositifs d'obturation décrits dans ces derniers documents ont pour inconvénients majeurs de ne permettre qu'une obturation locale et réduite d'une gaine de distribution et donc de ne pouvoir être utilisés qu'à l'entrée ou à la sortie de la gaine de distribution.

US-A-2 984 448 et GB-A-2 156 067 décrivent des dispositifs d'obturation à joint gonflable.

FR-A-2 461 606 décrit une installation de climatisation ou de ventilation pour l'intérieur d'un véhicule comprenant un plancher et des baies, l'installation comportant une gaine de distribution d'air traité, susceptible de s'étendre au niveau du plancher, communiquant, d'une part avec, avec des buses, susceptibles d'être disposées au droit des baies, à travers lesquelles est soufflée une première partie de l'air circulant dans la gaine, et d'autre part, avec une ouverture de base, susceptible d'être dirigée vers le plancher, à travers laquelle est soufflée une seconde partie de l'air circulant dans la gaine, l'installation comportant de plus des moyens d'obturation de l'ouverture de base de façon à moduler la répartition d'air à travers cette ouverture de base et les buses.

La présente invention permet de remédier de façon simple et peu coûteuse à tous les inconvénients exposés ci-dessus.

Aussi un but de l'invention est-il un dispositif d'obturation d'une gaine de distribution, permettant d'améliorer le confort climatique dans les salles ou locaux occupés par les voyageurs ou le personnel à bord d'un véhicule ferroviaire ou routier.

L'invention a pour objet une installation du type décrit dans FR-A-2 461 606, caractérisée en ce que les moyens d'obturation comprennent au moins un joint longitudinal gonflable entre une position de libération de l'ouverture de base dans laquelle le joint est rétracté dans son encombrement initial, et une position d'obturation de l'ouverture de base dans laquelle le joint est gonflé.

Suivant d'autres caractéristiques de cette installation :
- le joint gonflable se présente comme une bande longitudinale flexible creuse obturée à chacune de ses extrémités de manière à constituer une chambre communiquant avec un orifice d'entrée et de sortie d'air;
- le joint gonflable se présente comme une succession de segments de bandes longitudinales flexibles creuses obturées à chacune de leurs extrémités de manière à constituer des chambres communiquant chacune avec un orifice d'entrée et de sortie d'air;
- l'ouverture de base est délimitée par un organe profilé, muni de perforations le soufflage d'air, portant le joint gonflable;
- le joint gonflable coopère, lorsqu'il est gonflé, avec une partie de l'organe profilé lui faisant face;
- le joint gonflable comporte une excroissance destinée à venir en contact étroit avec la partie de l'organe profilé;
- les moyens d'obturation comprennent deux joints gonflables disposés têtebêche;
- la gaine est susceptible de s'étendre dans une salle du véhicule, l'ouverture de base étant susceptible de s'étendre sur la longueur de la salle, de préférence sur toute la longueur de la gaine, de façon à réaliser une distribution continue de l'air au niveau du plancher de la salle.

L'invention a également pour objet un véhicule caractérisé en ce qu'il est muni d'une installation telle que définie ci-dessus.

Un avantage du dispositif d'obturation d'une gaine de distribution de l'invention est sa fiabilité du fait qu'il ne comporte pas de pièces d'usure.

Un autre avantage du dispositif d'obturation d'une gaine de distribution de l'invention est son faible encombrement comparé à son aptitude à obturer une gaine de distribution sur toute sa longueur.

Un autre avantage du dispositif d'obturation d'une gaine de distribution de l'invention est son fonctionnement silencieux.

Un autre avantage du dispositif d'obturation d'une gaine de distribution de l'invention est sa maintenance aisée permettant notamment un nettoyage facile de l'intérieur de la gaine de distribution.

Un autre avantage du dispositif d'obturation d'une gaine de distribution de l'invention est son coût peu élevé.

Un autre avantage du dispositif d'obturation d'une gaine de distribution de l'invention est de pouvoir diminuer le débit de soufflage, sans l'annuler, en diminuant la pression d'air dans l'élément gonflable.

D'autres buts, caractéristiques et avantages de l'invention apparaîtront à la lecture de la description du mode de réalisation préféré du dispositif d'obturation d'une gaine de distribution, description faite en liaison avec les dessins dans lesquels:
- la figure 1 est une vue en perspective de l'intérieur d'un véhicule ferroviaire comportant une installation de climatisation ou de ventilation conforme à l'invention dans laquelle l'air traité est distribué par des gaines de distribution situées en plancher;
- la figure 2 montre le dispositif d'obturation d'une gaine de distribution représenté à la figure 1, le dispositif d'obturation étant en position telle qu'il obture la gaine de distribution;
- la figure 3 montre le dispositif d'obturation de la gaine de distribution représenté à la figure 1, le dispositif étant en position telle qu'il n'obture pas la gaine de distribution;
- la figure 4 montre un second mode de réalisation du dispositif d'obturation d'une gaine de distribution.

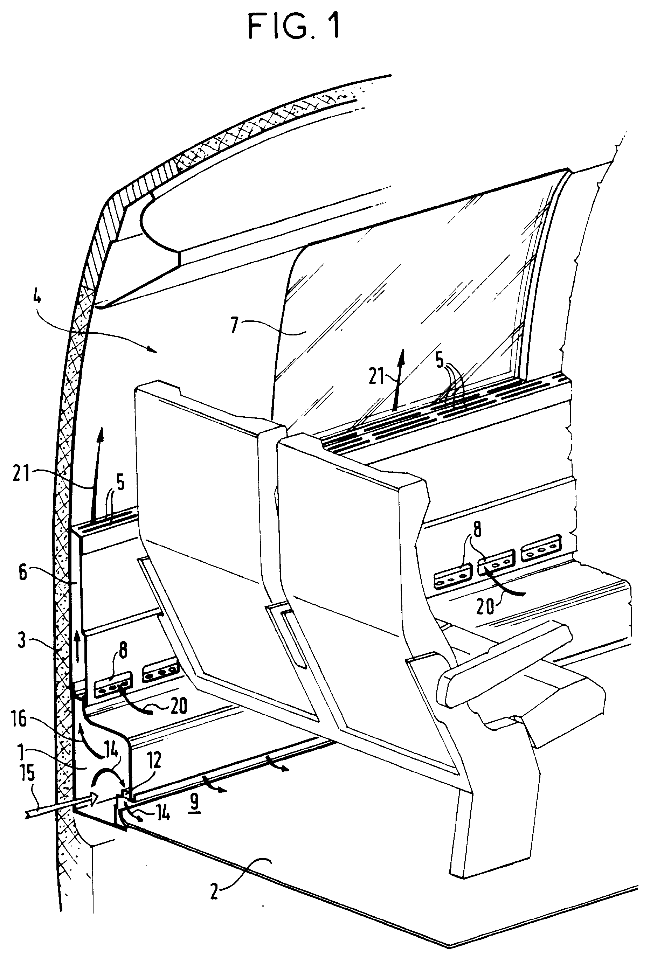

La figure 1 est une vue en coupe radiale d'un véhicule ferroviaire dont les parois sont équipées du dispositif d'obturation 12 d'une gaine de distribution conforme à l'invention.

L'air traité est produit par une installation de climatisation (non représentée) et est distribué dans les salles et locaux par des gaines de distribution 1.

Ces gaines de distribution 1 sont généralement situées au niveau du plancher 2, le long des parois 3 du véhicule 4.

Le soufflage de l'air s'effectue par l'intermédiaire de buses 5 en partie supérieure 6 de la gaine de distribution 1 et/ou par l'intermédiaire d'une ouverture 9 aménagée à la base de la gaine de distribution 1 et dirigée en direction du plancher 2.

Selon un premier principe, une première partie 16 de l'air traité 15 est soufflé par des buses 5 situées en partie supérieure 6 de la gaine de distribution 1.

Les buses 5 de la partie supérieure 6 de la gaine de distribution 1 sont localisées au droit de baies 7.

Conformément au mode de réalisation plus particulièrement représenté sur la figure 1, les buses 5 de la partie supérieure 6 de la gaine de distribution 1 sont réparties tout le long du véhicule de manière à coopérer avec des conduits appelés éjecto-convecteurs 8.

La fonction des éjecto-convecteurs 8 est de créer une induction de l'air 20 du véhicule et de le mélanger à la première partie 16 de l'air traité 15.

Ce mélange 21 est alors souffler à la base de chaque baie 7.

Selon un second principe, la seconde partie 14 de l'air traité 15 circule au niveau des pieds des voyageurs au moyen d'orifices 13 aménagés à la base de la gaine de distribution 1 et dirigés en direction du plancher 2.

La diffusion d'air vers le plancher 2 apporte un gain de confort en chauffage, puisque cette diffusion accélère le réchauffage au niveau du plancher.

Cette diffusion est d'ailleurs rendue obligatoire par les dernières normes ferroviaires, lesquelles imposent une faible dispersion verticale des températures dans le volume dédié aux voyageurs.

En contre partie, le soufflage d'air au plancher peut être source d'inconfort au niveau des pieds et des chevilles des voyageurs, lorsque la température de cet air soufflé diminue, en régime de réfrigération notamment.

Le principe du dispositif d'obturation de l'invention consiste à obturer à la demande le soufflage plancher par un système n'entraînant pas l'utilisation de pièces d'usures propices au grippage dans le temps du fait, par exemple, de la condensation ou de l'échange thermique dans le réseau de gaines de distribution.

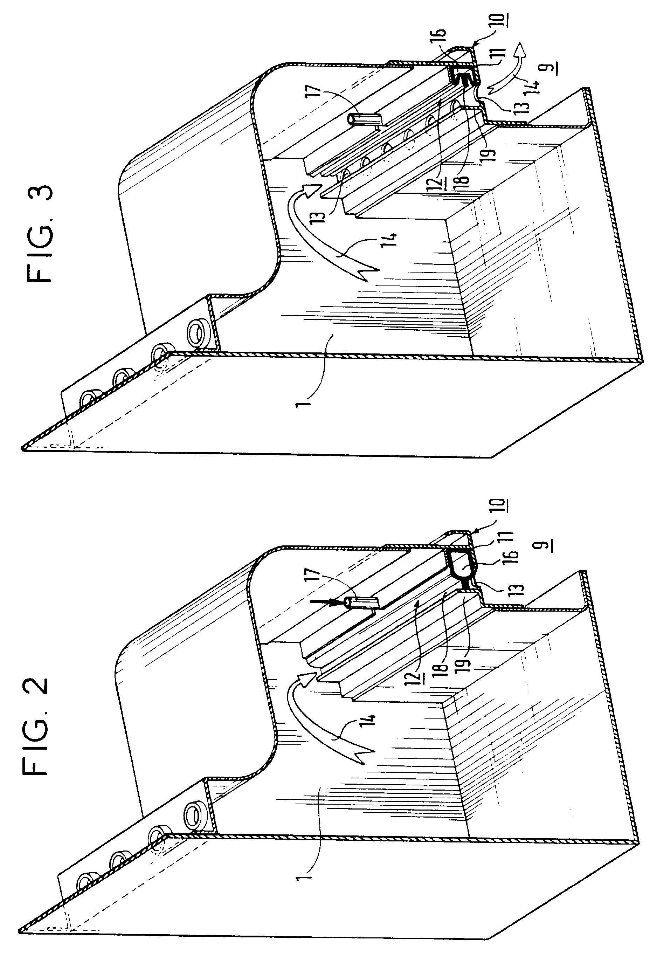

Les figures 2 et 3 montrent le dispositif d'obturation d'une gaine de distribution représenté à la figure 1, le dispositif étant dans une position telle qu'il obture la gaine de distribution et dans une position telle qu'il n'obture pas la gaine de distribution, respectivement.

Conformément au mode de réalisation préféré de la figure 1, les figures 2 et 3 représentent un profil 10 aluminium rigide comportant des perforations de soufflage plancher 13 ainsi qu'une feuillure 11 sur toute sa longueur. Cette feuillure est utilisée pour l'encastrement du dispositif d'obturation 12.

Un joint longitudinal gonflable, constituant le dispositif d'obturation 12, est, par exemple, collé à sa base dans la feuillure 11 du profil 10.

Le joint longitudinal gonflable 12 se présente comme une bande longitudinale flexible creuse obturée à chacune de ses extrémités de manière à constituer une chambre 16 et comportant un orifice 17 d'entrée et de sortie d'air.

De préférence, le joint longitudinal gonflable 12 comporte sur son côté perpendiculaire aux perforations de soufflage plancher 13 une excroissance 18 destinée à collaborer avec le profil 10 de manière à venir en contact étroit avec une partie 19 du profil 10 lui faisant face.

Le joint longitudinal gonflable peut également se présenter comme une succession de segments de bandes longitudinales flexibles creuses obturées à chacune de leurs extrémités de manière à constituer une chambre et comportant chacune un orifice d'entrée et de sortie d'air.

Conformément au mode de mise en oeuvre, le joint longitudinal gonflable est susceptible d'être alimenté en air comprimé, par exemple en air détendu à la pression d'utilisation.

Le joint longitudinal gonflable en se gonflant vient faire obstacle aux perforations de soufflage plancher 13.

Le joint longitudinal gonflable peut également ne pas être alimenté en air. Dans ce cas, le joint longitudinal gonflable se rétracte dans son encombrement initial à l'état repos et libère les perforations de soufflage plancher 13 de manière à laisser passer la seconde partie 14 de l'air traité 15 de manière à permettre le soufflage de l'air en direction du plancher 2.

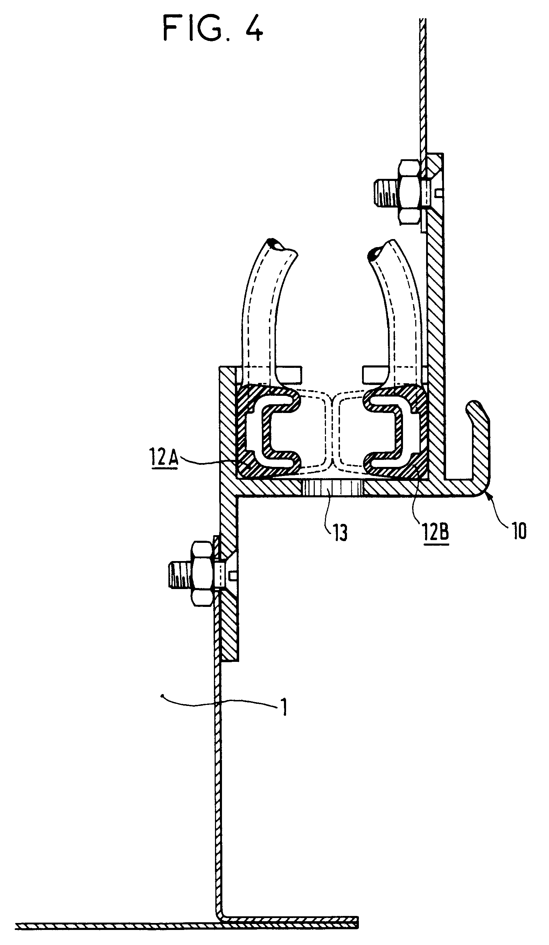

La figure 4 montre un second mode de réalisation du dispositif d'obturation d'une gaine de distribution.

Comme représenté sur la figure 4, la forme du profil 10 est modifié de manière à permettre le maintien de deux moyens longitudinaux gonflables (12A, 12B).

Conformément à ce second mode de réalisation préféré du dispositif d'obturation d'une gaine de distribution, ces deux moyens longitudinaux gonflables (12A, 12B) sont disposés en position têtes bêches.

Une telle configuration a comme avantage de permettre de réduire la course de chacun des moyens longitudinaux gonflables.

Le dispositif d'obturation de l'invention permet donc d'obturer de façon simple un orifice de soufflage continu sur la longueur de la salle, non limité en longueur.

Le dispositif d'obturation de l'invention peut aussi s'appliquer à un soufflage discontinu.

Le dispositif d'obturation selon l'invention a également comme avantage, en mode chauffage, de permettre la modulation du débit et l'augmentation ou la diminution du débit et de la vitesse de l'air sortant au niveau des baies.

Un autre avantage est la diminution du temps de préconditionnement.

L'installation de climatisation est préconditionnée avant la montée des passagers de manière à rendre la température intérieure agréable.

Cette mise en préréfigération ou préchauffage peut intégrer le soufflage plancher qui permet un meillleur brassage de l'air, donc une meilleure homogénéité de la température et ceci dans un temps plus court.

## Revendications

1. Installation de climatisation ou de ventilation pour l'intérieur d'un véhicule comprenant un plancher (2) et des baies (7), l'installation comportant une gaine (1) de distribution d'air traité, susceptible de s'étendre au niveau du plancher (2), communiquant, d'une part, avec des buses (5), susceptibles d'être disposées au droit des baies (7), à travers lesquelles est soufflée une première partie (16) de l'air circulant dans la gaine (1), et d'autre part, avec une ouverture de base (9), susceptible d'être dirigée vers le plancher (2), à travers laquelle est soufflée une seconde partie (14) de l'air circulant dans la gaine (1), l'installation comportant de plus des moyens (12 ; 12A, 12B) d'obturation de l'ouverture de base (9) de façon à moduler la répartition d'air à travers cette ouverture de base (9) et les buses (5), **caractérisée en ce que** les moyens d'obturation comprennent au moins un joint longitudinal (12 ; 12A, 12B) gonflable entre une position de libération de l'ouverture de base (9), dans laquelle le joint (12 ; 12A, 12B) est rétracté dans son encombrement initial, et une position d'obturation de l'ouverture de base (9), dans laquelle le joint (12 ; 12A, 12B) est gonflé.

2. Installation selon la revendication 1, caractérisée en ce que le joint gonflable (12) se présente comme une bande longitudinale flexible creuse obturée à chacune de ses extrémités de manière à constituer une chambre (16) communiquant avec un orifice (17) d'entrée et de sortie d'air.

3. Installation selon la revendication 1 ou 2, caractérisée en ce que le joint gonflable (12) se présente comme une succession de segments de bandes longitudinales flexibles creuses obturées à chacune de leurs extrémités de manière à constituer des chambres communiquant chacune avec un orifice d'entrée et de sortie d'air.

4. Installation selon l'une quelconque des revendications 1 à 3, caractérisée en ce que l'ouverture de base (9) est délimitée par un organe profilé (10), muni de perforations (13) de soufflage d'air, portant le joint gonflable (12).

5. Installation selon la revendication 4, caractérisée en ce que le joint gonflable (12) coopère, lorsqu'il est gonflé, avec une partie (19) de l'organe profilé (10) lui faisant face.

6. Installation selon la revendication 5, caractérisée en ce que le joint gonflable (12) comporte une excroissance (18) destinée à venir en contact étroit avec la partie (19) de l'organe profilé (10).

7. Installation selon l'une quelconque des revendications 1 à 4, caractérisée en ce que les moyens d'obturation comprennent deux joints gonflables (12A, 12B) disposés tête-bêche.

8. Installation selon l'une quelconque des revendications précédentes, caractérisée en ce que la gaine (1) est susceptible de s'étendre dans une salle du véhicule, l'ouverture de base (9) étant susceptible de s'étendre sur la longueur de la salle, de préférence sur toute la longueur de la gaine (1), de façon à réaliser une distribution continue de l'air au niveau du plancher de la salle.

9. Véhicule caractérisé en ce qu'il est muni d'une installation selon l'une quelconque des revendications précédentes.

## Claims

1. A ventilation or air-conditioning installation for the inside of a vehicle comprising a floor (2) and windows (7), the installation including a distribution duct (1) for distributing treated air, the duct being capable of extending along the floor (2) and communicating firstly with vents (5), suitable for being disposed in groups under the windows (7), and through which a first portion (16) of the air flowing in the duct (1) is blown, and secondly, with a base opening (9), suitable for being directed towards the floor (2), and through which a second portion (14) of the air circulating in the duct (1) is blown, the installation also including shutter means (12; 12A, 12B) for shutting off the base opening (9) so as to modulate the distribution of air through said base opening (9) and the vents (5), the installation being characterized in that the shutter means comprise at least one longitudinally-extending inflatable gasket (12; 12A, 12B) that is inflatable between a position in which the base opening (9) is uncovered, in which the gasket (12; 12A, 12B) is retracted to its initial volume, and a position in which the base opening (9) is shut off, in which the gasket (12; 12A, 12B) is inflated.

2. An installation according to claim 1, characterized in that the inflatable gasket (12) is in the form of a hollow flexible longitudinal strip that is closed at both of its ends so as to constitute a chamber (16) communicating with an air inlet/outlet orifice (17).

3. An installation according to claim 1 or 2, characterized in that the inflatable gasket (12) is in the form of a succession of hollow flexible longitudinal strip segments, each of which is closed at both of its ends so as to constitute chambers each communicating with a respective air inlet/outlet orifice.

4. An installation according to any one of claims 1 to 3, characterized in that the base opening (9) is defined by an extruded member (10), provided with air blow perforations (13), carrying the inflatable gasket (12).

5. An installation according to claim 4, characterized in that the inflatable gasket (12), when inflated, cooperates with a facing portion (19) of the extruded member (10).

6. An installation according to claim 5, characterized in that the inflatable gasket (12) includes an outwardly-extending projection (18) designed to come into close contact with the portion (19) of the extruded member (10).

7. An installation according to any one of claims 1 to 4, characterized in that the shutter means comprise two inflatable joints (12A, 12B) disposed head-to-tail.

8. An installation according to any preceding claim, characterized in that the duct (1) is capable of extending over the length of the area or compartment of the vehicle, the base opening (9) being capable of extending over the length of the area or compartment, preferably over the length of the duct (1), so as to provide continuous distribution of air in the area or compartment at floor level.

9. A vehicle characterized in that it is provided with an installation according to any preceding claim.

## Patentansprüche

1. Klima- oder Belüftungsanlage für das Innere eines Fahrzeugs, das einen Fußboden (2) und Fenster (7) besitzt, wobei die Anlage eine Röhre (1) zum verteilen von behandelter Luft umfasst, die geeignet ist, sich in Höhe des Fußbodens (2) zu erstrecken und die einerseits mit Düsen (5), die geeignet sind, an den Fenstern (7) angeordnet zu werden, durch die ein erster Teil (16)der in der Röhre (1) fließenden Luft geblasen wird, und andererseits mit einer Basisöffnung (9) in Verbindung steht, die geeignet ist, auf den Fußboden ausgerichtet zu werden und durch die ein zweiter Teil (14) der in der Röhre (1) fließenden Luft geblasen wird, wobei die Anlage ferner Mittel (12; 12A, 12B) zum Verschließen der Basisöffnung umfasst, um die Luftverteilung durch diese Basisöffnung (9) und die Düsen (5) zu modulieren, dadurch gekennzeichnet, dass die Verschlussmittel wenigstens eine longitudinale Dichtung (12; 12A, 12B) umfassen, die zwischen einer Freigabeposition der Basisöffnung (9), in der die Dichtung (12; 12A, 12B) auf ihren ursprünglichen Platzbedarf zusammengezogen ist, und einer Verschlussposition der Basisöffnung (9) aufblasbar ist, in der die Dichtung (12; 12A, 12B) aufgeblasen ist.

2. Anlage nach Anspruch 1, dadurch gekennzeichnet, dass die aufblasbare Dichtung die Form eines longitudinalen flexiblen hohlen Streifens hat, der an jedem seiner Enden verschlossen ist, um eine Kammer (16) zu bilden, die mit einer Lufteinlass- und -auslassöffnung (17) in Verbindung steht.

3. Anlage nach Anspruch 1 oder 2, dadurch gekennzeichnet, dass die aufblasbare Dichtung (12) die Form einer Folge von an jedem ihrer Enden verschlossenen longitudinalen flexiblen hohlen Streifen hat, um Kammern zu bilden, die jeweils mit einer Lufteinlass- und -auslassöffnung in Verbindung stehen.

4. Anlage nach einem der Ansprüche 1 bis 3, dadurch gekennzeichnet, dass die Basisöffnung (9) durch ein profiliertes Organ (10) begrenzt ist, das mit Durchbrüchen (13) zum Blasen von Luft versehen ist und die aufblasbare Dichtung (12) trägt.

5. Anlage nach Anspruch 4, dadurch gekennzeichnet, dass die aufblasbare Dichtung (12), wenn sie aufgeblasen ist, mit einem ihr zugewandten Teil (19) des profilierten Organs (10) zusammenwirkt.

6. Anlage nach Anspruch 5, dadurch gekennzeichnet, dass die aufblasbare Dichtung eine Ausstülpung (18) aufweist, die vorgesehen ist, um mit dem Bereich (19) des profilierten Organs (10) in engen Kontakt zu kommen.

7. Anlage nach einem der Ansprüche 1 bis 4, dadurch gekennzeichnet, dass die Mittel zum Verschließen zwei gegenläufig angeordnete aufblasbare Dichtungen (12A, 12B) umfassen.

8. Anlage nach einem der vorhergehenden Ansprüche, dadurch gekennzeichnet, dass die Röhre (1) geeignet ist, sich in einem Raum des Fahrzeugs zu erstrecken, wobei die Basisöffnung (9) geeignet ist, sich über die Länge des Raums, vorzugsweise über die gesamte Länge der Röhre (1), zu erstrecken, um eine kontinuierliche Luftverteilung in Höhe des Fußbodens des Raumes zu erzielen.

9. Fahrzeug, dadurch gekennzeichnet, dass es mit einer Anlage nach einem beliebigen der vorhergehenden Ansprüche ausgestattet ist.
